# EUROPÄISCHE PATENTANMELDUNG

(11) **EP 2 497 367 A2**
(43) Veröffentlichungstag der Anmeldung: **12.09.2012**
(21) Anmeldenummer: 12158273.8
(22) Anmeldetag: 06.03.2012
(51) Int. Cl.: A22C 15/00

(54) **Vorrichtung und Verfahren zum Zuführen von Wurstketten zu einer Aufhängevorrichtung**

(30) Priorität: 07.03.2011 DE 102011005201
(71) Anmelder: VEMAG Maschinenbau GmbH, 27283 Verden/Aller (DE)
(72) Erfinder: Krompholz, Harry, 27313 Dörverden-Stedorf (DE); Knodel, Peter, 28876 Oyten (DE); Bilowski, Jörg, 22941 Delingsdorf (DE)
(74) Vertreter: Eisenführ, Speiser & Partner

(57) **Zusammenfassung**

Die Erfindung betrifft eine Vorrichtung (1) zum Aufhängen von Würstchenketten in Schlaufen (2), mit einer Führungs- und Antriebseinrichtung zum Führen und Antreiben von Haken (8) entlang einer Bewegungsbahn, welche ein antreibbares, umlaufendes Antriebselement zur beabstandeten Aufnahme und zum Antreiben mehrerer Haken (8) aufweist, und mit mehreren mit dem Antriebselement koppelbaren Haken (8) zum Tragen einer Schlaufe (2) der Würstchenkette. Die Vorrichtung weist eine Abfangeinrichtung (10) zum Abfangen einer Schlaufe (2) auf, welche unterhalb und im Wesentlichen radial außerhalb der Bewegungsbahn der Haken angeordnet ist. Ferner betrifft die Erfindung ein Verfahren zum Zuführen von Würstchenketten zu einer Vorrichtung sowie eine Abfangeinrichtung.

## Beschreibung

Die Erfindung betrifft eine Vorrichtung zum Aufhängen von Würstchenketten in Schlaufen, mit einer Führungs- und Antriebseinrichtung zum Führen und Antreiben von Haken entlang einer Bewegungsbahn, welche ein antreibbares, umlaufendes Antriebselement zur beabstandeten Aufnahme und zum Antreiben mehrerer Haken aufweist, und mit mehreren mit dem Antriebselement koppelbaren Haken zum Tragen einer Schlaufe der Würstchenkette. Ferner betrifft die Erfindung ein Verfahren zum Zuführen von Würstchenketten zu einer Vorrichtung zum Aufhängen von Würstchenketten sowie eine Abfangeinrichtung zum Abfangen von Schlaufen, welche auf einer Vorrichtung zum Aufhängen von Würstchenketten aufhängbar sind.

Würstchen werden üblicherweise mit bekannten Wurstfüllmaschinen in Form langer portionierter Wurstketten hergestellt. Zwei benachbarte Wursthüllen sind dabei jeweils durch eine Abdrehstelle oder einen mit weniger Wurstbrät gefüllten Bereich voneinander getrennt. Die gefüllten und abgeteilten Wursthüllen werden in Schlaufen gelegt und an eine Aufhängevorrichtung gehängt. Durch die Schlaufen der an der Aufhängevorrichtung hängenden Würste wird ein Rauchspieß oder Rauchstock hindurch geschoben. Die Würstchenkette wird dann in dieser Form auf einen Rauchwagen gehängt, der anschließend in eine Räucherkammer gefahren wird.

Dabei kann eine Aufhängevorrichtung beispielsweise einen umlaufenden Trum mit Haken aufweisen. Die Haken laufen bei einer solchen Vorrichtung so auf dem Trum um, dass jeweils eine Wurstschlaufe beim Zuführen von einem Haken ergriffen wird und so auf diesem aufgehängt wird. Dabei ist es wichtig, dass die Würstchen bzw. Schlaufen korrekt auf den Haken aufgehängt sind und sich gegenseitig nicht berühren. Dies ist insbesondere beim Räuchern der Würstchen von entscheidender Bedeutung. Andernfalls würden an den Berührungsstellen helle Flecken zurückbleiben, die nicht nur das Äußere der Würstchen ungünstig beeinflussen, sondern auch deren Haltbarkeit herabsetzten.

Ein weiteres Problem ist die Übergabe der einzelnen Schlaufen an die Aufhängevorrichtung. Bei herkömmlichen Vorrichtungen der eingangs genannten Art kommt es häufig zu Fehlhängungen, Verdrehen von einzelnen Schlaufen sowie Herabspringen der Schlaufen von den Haken. Dadurch ist es häufig erforderlich, dass die einzelnen Schlaufen von Hand zurecht gehängt und gerichtet werden. Dies ist eine mühselige und zeitaufwendige Arbeit. Insbesondere treten diese Probleme bei hohen Zuführgeschwindigkeiten und prallen Würstchen auf.

Eine bekannte Vorrichtung zum Zuführen von Wurstschleifen zu einem Rauchstock ist in EP 0 482 368 B1 offenbart. Diese Vorrichtung weist ein in einer horizontalen Ebene umlaufendes Transportband mit einer Vielzahl von Haken auf. Beim Passieren der Haken der Füllmaschine kommen Abdrehstellen zwischen zwei Würstchen mit einem Haken in Kontakt und eine Schlaufe wird so auf einem Haken aufgehängt. Zusätzlich weist diese Vorrichtung eine Begrenzungsstange und einen Halter auf, die radial innerhalb der Führungsbahn der Haken angeordnet sind. Die Würstchen werden um den Halter herum und über die Begrenzungsstange geführt, wodurch ein seitliches Ausbrechen nahe am Austritt der Füllmaschine verhindert werden soll, sodass der Haken sicher mit der Abdrehstelle in Kontakt kommt.

Dennoch bestehen die oben genannten Probleme auch bei dieser Vorrichtung fort. Insbesondere durch das gezwungene Führen der Würstchen durch die Begrenzungsstange geraten diese unter Spannung, wodurch ein nachträgliches Herabspringen der Schlaufen von den Haken auftreten kann. Auch besteht bei dieser Vorrichtung das Problem des Verdrehens eine Schlaufe weiter.

Der vorliegenden Erfindung liegt die Aufgabe zugrunde eine Vorrichtung sowie ein Verfahren anzugeben, welche bezüglich wenigstens eines der oben genannten Probleme verbessert sind. Ferner ist es Aufgabe der vorliegenden Erfindung eine Vorrichtung und ein Verfahren anzugebenen durch welche ein Herunterspringen der Würstchen von den Haken vermieden wird und/oder die Zuführgeschwindigkeit von Würstchenketten zu einer Aufhängevorrichtung erhöht werden kann.

Diese Aufgabe wird bei einer Vorrichtung der eingangs genannten Art durch eine Abfangeinrichtung zum Abfangen einer Schlaufe, welche unterhalb und im Wesentlichen radial außerhalb der Bewegungsbahn der Haken angeordnet ist gelöst.

Durch eine solche Abfangeinrichtung werden die Schlaufen, welche aus Würstchenkette gebildet sind und über den Haken aufgehängt sind, so abgefangen, dass diese in ihrer Bewegung beruhigt werden und ein Hin- und Herschwingen von einzelnen Schlaufen vermieden wird. Dadurch wird einerseits ein Verdrehen einer Schlaufe als auch ein Herabspringen einer Schlaufe von einem Haken vermieden.

Beim Zuführen von Würstchenketten zu einer Aufhängevorrichtung wird nicht jede Abdrehstelle über einen Haken gehängt, sondern nur jede zweite, dritte, vierte usw. So entsteht eine Schlaufe, die aus einer Mehrzahl von Würstchen gebildet ist. Eine Würstchenkette fällt also zunächst herab, bevor die nächste zu ergreifende Abdrehstelle von einem Haken ergriffen wird und so eine Schlaufe gebildet wird. Bei diesem Herabfallen der Würstchenkette zum Bilden der Schlaufe kommt es zum Aufspreizen und Hin- und Herschwingen der Schlaufen, welche durch die erfindungsgemäße Abfangeinrichtung verhindert werden. Eine Schlaufe wird direkt nach dem Bilden dieser Schlaufe von der Abfangeinrichtung abgefangen, wodurch ein Aufspreizen einer Wurstschlaufe und ein Schwingen verhindert werden. Auch ein nachträgliches Herabspringen einer Schlaufe von einem Haken wird durch die erfindungsgemäße Abfangeinrichtung verhindert, indem die aus der Zuführung und aus der Schlaufenbildung resultierende Bewegungsenergie aus der Schlaufe durch die Abfangeinrichtung aufgenommen und abgeführt wird. Dazu ist die Abfangeinrichtung vorzugsweise dazu eingerichtet, eine Schlaufe bzw. eine Würstchenkette in einer Flugbewegung bei einem Zuführen von der Zuführvorrichtung zu der Vorrichtung zum Aufhängen abzufangen.

Gemäß einer ersten bevorzugten Ausführungsform ist die Abfangeinrichtung als Bügel ausgebildet. Bügel bezieht sich hier auf jede Gestaltung einer Abfangeinrichtung, die im Wesentlichen entsprechend oder ähnlich einem Bügel ausgebildet ist. Dabei können beispielsweise zum Einsatz kommen: gekrümmte Stangen, Bleche, mehrere gewinkelte Stangen, zu einem Polygon verbundene Stangenabschnitte, Blechwände, gekrümmte Gitter, gekrümmte Drahtgeflechte, Kunststoffpolster, Kissen, Kunststoffgeflecht etc. Insbesondere mittels eines solchen Bügels lässt sich eine Schlaufe auf vorteilhafte Weise abfangen. Die gekrümmte bzw. geschwungene Form eines Bügels eignet sich insbesondere dazu, eine aufzuhängende Schlaufe entsprechend abzufangen und gleichzeitig in eine gewünschte Position zu führen. Die Schlaufe wird durch einen erfindungsgemäßen Bügel sanft gefangen und ausgerichtet.

Gemäß einer weiteren bevorzugten Ausführungsform ist der Bügel im Wesentlichen viertelkreisförmig ausgebildet, wobei der Radius dieses Viertelkreises gleich groß oder größer als der Radius der Bewegungsbahn der Haken ist. Insbesondere eine viertelkreisförmige Form ist vorteilhaft einsetzbar, falls die Haken auf einer Bahn umlaufen, die im Wesentlichen oval ausgebildet ist und an den Scheitelpunkten halbkreisförmig ausgebildet ist. Durch die Ausbildung einer Abfangeinrichtung als viertelkreisförmiger Bügel, kann sich diese an die Bewegungsbahn der Haken geometrisch anschmiegen und so zu einem sanfteren Abfangen und einem stärkeren Beruhigen der Schlaufen beitragen. Insbesondere ist es vorteilhaft, wenn der Radius dieses Viertelkreises gleich groß und insbesondere größer als der Radius der Bewegungsbahn der Haken ist. Dies führt zu einem besonders sanften und materialschonenden Abfangen. Die Schlaufen bzw. Würstchenketten werden nicht übermäßig auf eine Bahn gezwungen, sondern vielmehr wird die natürliche Bewegung der Schlaufen abgefangen und beruhigt. Dies führt zu einem sicheren Aufhängen ohne ein Herunterspringen der Würstchen. Zudem ist die Zuführgeschwindigkeit einer Zuführmaschine vergrößerbar.

Gemäß einer weiteren bevorzugten Ausführungsform ist die Abfangeinrichtung verstellbar, vorzugsweise in einer Höhenrichtung, einer Längsrichtung und/oder einer Querrichtung der Vorrichtung. Die Anforderungen an eine Abfangeinrichtung können beispielsweise mit Zuführgeschwindigkeit, und Art der Würstchen variieren. Indem die Abfangeinrichtung verstellbar ist, wird die Flexibilität einer Vorrichtung zum Aufhängung von Würstchenketten wesentlich erhöht und so auch das sichere Aufhängen der Würstchenketten auf den Haken fortgebildet.

Gemäß einer weiteren bevorzugten Ausführungsform ist die Abfangeinrichtung so angeordnet, dass sie von einem Haken aus gesehen in einem Bereich zwischen etwa 20 % bis 90 %, insbesondere 20 % bis 60 % der Höhe einer Schlaufe der Würstchenkette angeordnet ist. Ein Anordnen der Abfangeinrichtung in dieser Höhenposition der Vorrichtung bezogen auf einen Haken ist insbesondere vorteilhaft, da die Schlaufen so besonders effektiv beruhigt werden, wodurch ein Herunterspringen und Verdrehen der Schlaufen vermieden wird. Wird die Abfangeinrichtung zu weit oben, beispielsweise bei 10 % der Länge einer Schlaufe der Würstchenkette von einem Haken aus gesehen, angeordnet führt dies dazu, dass ein Verdrehen oder gar ein Herabspringen der Schlaufen von den Haken nicht ausreichend verhindert wird. Wird die Abfangeinrichtung zu niedrig angeordnet, beispielsweise bei 95 % der Länge einer Schlaufe, kann es vorkommen, dass die Schlaufe über die Abfangeinrichtung hinweg rutscht und so ein Verdrehen noch weiter verstärkt wird.

Gemäß einer weiteren bevorzugten Ausführungsform ist die Abfangeinrichtung relativ zu der Vorrichtung zum Aufhängen von Würstchenketten in Abhängigkeit von mindestens einem der folgenden Parameter angeordnet: Zuführgeschwindigkeit einer Zuführung von Würstchenketten zu der Vorrichtung; Anzahl der Würstchen je Schlaufe; Höhe der Schlaufe in einem aufgehängten Zustand; Masse eines Würstchens; Verhältnis der Länge einer Abdrehstelle zu der Länge eines Würstchens; Festigkeit eines Würstchens; Füllmaterial; Umhüllungsmaterial; Hakengeometrie; Durchmesser eines Würstchens; Länge einer Abdrehstelle, Temperatur. All diese Parameter beeinflussen das Schlaufenbildungsverhalten einer Würstchenkette und auch die Flugeigenschaften der Würstchenkette während des Aufhängens. Indem die Abfangeinrichtung in Abhängigkeit von einem dieser Parameter oder einer Kombination von mindestens zwei dieser Parameter angeordnet ist, wird eine Schlaufe noch effektiver abgefangen. So ist es möglich ein Verdrehen der Schlaufen zu verhindern und auch ein Herabspringen der Schlaufen von den Haken zu verhindern.

Gemäß einer weiteren bevorzugten Ausführungsform ist die Abfangeinrichtung von einem Haken aus gesehen in Höhe des zweiten Würstchens angeordnet, falls eine Schlaufe vier oder sechs Würstchen aufweist, in Höhe des dritten Würstchens angeordnet, falls eine Schlaufe acht Würstchen aufweist und in Höhe des vierten Würstchens angeordnet, falls eine Schlaufe zehn oder zwölf Würstchen aufweist. So wird erfindungsgemäß eine vorteilhafte Anordnung der Abfangeinrichtung in Abhängigkeit des Parameters Anzahl der Würstchen je Schlaufe vorteilhaft fortgebildet. Es hat sich gezeigt, dass insbesondere eine solche Anordnung vorteilhaft ist, um eine Schlaufe effektiv abzufangen und ein Verdrehen der Schlaufen zu vermeiden. Auch wird durch eine solche Positionierung der Abfangeinrichtung ein Herunterspringen der Schlaufen von den Haken vermieden und die Zuführgeschwindigkeit einer Zuführmaschine kann wesentlich erhöht werden.

Gemäß einer weiteren bevorzugten Ausführungsform ist die Abfangeinrichtung radial in einem größeren Abstand von der Bewegungsbahn angeordnet, falls eine Zuführgeschwindigkeit groß und/oder eine Würstchenmasse klein und/oder die Anzahl der Würstchen je Schlaufe groß ist, und radial in einem kleineren Abstand von der Bewegungsbahn angeordnet, falls die Zuführgeschwindigkeit klein und/oder die Würstchenmasse groß und/oder die Anzahl der Würstchen je Schlaufe klein ist. Ein radialer Abstand der Abfangeinrichtung zu der Bewegungsbahn der Haken hat im Wesentlichen Einfluss auf ein Aufspreizen der Schlaufen, ein Schwingen der Schlaufen als auch ein Führen der Schlaufen. Wird die Abfangeinrichtung in der beschriebenen Art und Weise in Abhängigkeit der Zuführgeschwindigkeit, der Würstchenmasse oder der Anzahl der Würstchen je Schlaufe angeordnet, wird ein ungewolltes Aufspreizen und ein Verdrehen der Schlaufen effektiv vermieden, ohne die Würstchen zu sehr einer mechanischen Einwirkung auszusetzten.

In einem weiteren Aspekt der Erfindung wird die Aufgabe bei einem Verfahren der eingangs genannten Art durch die Schritte gelöst: Zuführen der Würstchenkette aus einer Füllmaschine zu der Vorrichtung, Bereitstellen eines Hakens zum Fangen einer Abdrehstelle zwischen zwei Würstchen, Fangen der Abdrehstelle mittels des Hakens und Beruhigen einer schwingenden Schlaufe mittels einer Abfangeinrichtung. Insbesondere bevorzugt ist die Abfangeinrichtung nach den Merkmalen einer oben beschriebenen Abfangeinrichtung gestaltet. Mittels dieses erfindungsgemäßen Verfahrens werden ein Aufspreizen der Schlaufen, ein Verdrehen der Schlaufen sowie ein Herabspringen der Schlaufen von den Haken effektiv vermieden. Durch das Beruhigen der Schlaufen in dem vierten Schritt des Verfahrens, wird Energie, beispielsweise Bewegungs- oder Schwingungsenergie, aus den Schlaufen abgeführt, wodurch diese ruhig auf den Haken zum Hängen kommen und in einer geordneten Art und Weist vorliegen. Vorzugsweise werden die Schlaufen in einem Bereich nahe des unteren Scheitelpunkts, beabstandet zu den Haken, beruhigt.

In einem alternativen oder zusätzlichen Verfahren zum Beruhigen von Schlaufen auf einer Vorrichtung zum Aufhängen von Würstchenketten, wie beispielsweise und insbesondere einer Vorrichtung der eingangs genannten Art, werden die Schritte durchgeführt: Bestimmen einer Zuführgeschwindigkeit einer Zuführung von Würstchenketten zu der Vorrichtung, Bestimmen einer Anzahl von Würstchen je Schlaufe, Bestimmen einer Höhe der Schlaufe in einem aufgehängten Zustand und Positionieren der Abfangeinrichtung an einem Ort in Abhängigkeit der Zuführgeschwindigkeit, der Anzahl von Würstchen je Schlaufe und der Höhe der Schlaufen. Insbesondere ist ein solches Verfahren vorteilhaft in Verbindung mit der zuvor beschriebenen Vorrichtung und/oder dem zuvor beschriebenen Verfahren.

Gemäß eines weiteren Aspekts der Erfindung wird die Aufgabe bei einer Abfangeinrichtung der eingangs genannten Art zum Abfangen von Schlaufen, welche auf einer Vorrichtung aufhängbar sind, gelöst, indem die Abfangeinrichtung dazu eingerichtet ist, mit einer Vorrichtung mit den Merkmalen einer oben beschriebenen Vorrichtung zusammenzuwirken. Alternativ oder zusätzlich ist die erfindungsgemäße Abfangeinrichtung dazu eingerichtet in einem Verfahren mit den Merkmalen und Schritten eines oben beschriebenen Verfahrens betrieben zu werden. Insbesondere ist die Abfangeinrichtung als eine oben beschriebene Abfangeinrichtung ausgebildet und/oder weist die Merkmale einer oben beschriebenen Abfangeinrichtung auf. Vorzugsweise ist eine solche Abfangeinrichtung als Bügel ausgebildet. Für die Vorteile wird auf die oben beschriebene Vorrichtung und auf das oben beschriebene Verfahren verwiesen.

Nachstehend wird die Erfindung anhand eines Ausführungsbeispiels unter Bezug auf die beiliegenden Zeichnungen genauer beschrieben. Es zeigen:
- Figur 1: eine Gesamtansicht einer Vorrichtung zum Aufhängen von Würstchenketten mit einer Zuführmaschine und einer Füllmaschine;
- Figur 2: eine Detailansicht einer Abfangeinrichtung an einer Vorrichtung zum Aufhängen von Würstchenketten; und
- Figur 3: eine Draufsicht auf eine Abfangeinrichtung.

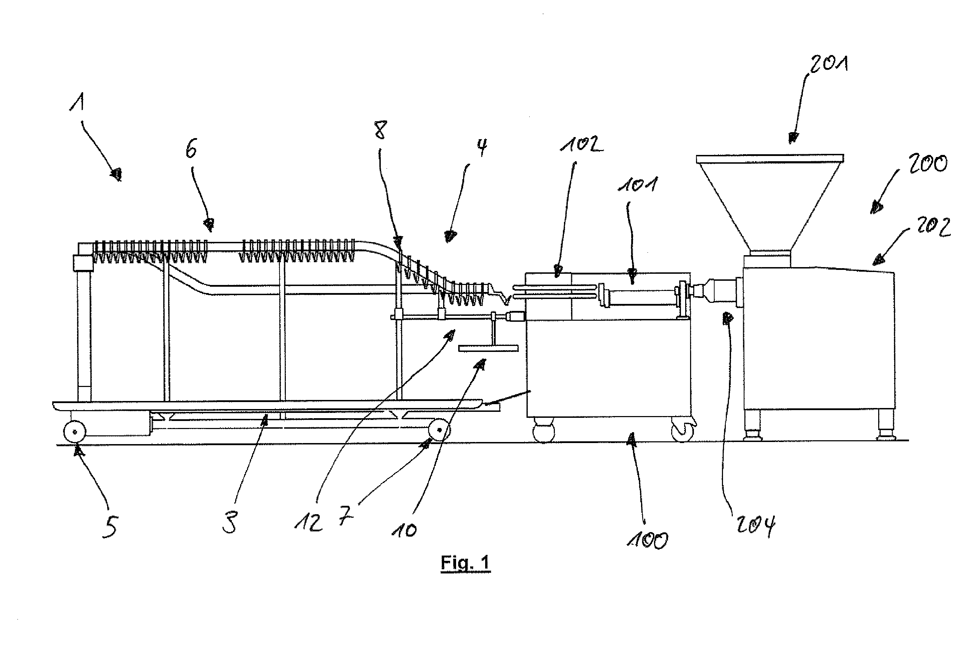

Eine Vorrichtung 1 zum Aufhängen von Würstchenketten ist vorzugsweise in einer Produktionslinie zusammen mit einem Vorsatzgerät 100 und einer Füllmaschine 200 angeordnet (Figur 1). Die Füllmaschine 200 weist ein Maschinengestell 202 und einen Fülltrichter 201 auf, durch den Wurstbrät zuführbar ist. Das Wurstbrät wird durch einen Verbindungsrohr 204 einem Vorsatzgerät 100 zugeführt. Dieses weist eine Halterung 101 für ein Füllrohr oder eine Abdreheinrichtung (nicht gezeigt) zum Erzeugen von Abdrehstellen 22 auf und zwei parallel angeordnete Bänder 102 zum Fördern der abgedrehten Würstchen zu der Vorrichtung 1 zum Aufhängen von Würstchenketten.

Die Vorrichtung 1 weist ein Gestell 3 auf, welches über Rollen 5, 7 verfügt, über welche die Vorrichtung 1 verschiebbar angeordnet ist. Auf dem Gestell 3 ist eine umlaufende Aufnahme 6 von Haken 8 angeordnet, die in einem Zuführabschnitt 4 ansteigend ausgebildet ist. Unterhalb der Haken 8 und unterhalb der Bänder 102 des Vorsatzgeräts 100 ist eine Abfangeinrichtung 10 angeordnet. Die Abfangeinrichtung 10 ist mittels eines Gestänges 12 mit dem Gestell 3 der Vorrichtung 1 verbunden. Gemäß diesem Ausführungsbeispiel ist die Abfangeinrichtung 10 als Bügel ausgebildet und weist eine geringe Ausdehnung in einer vertikalen Richtung auf. Dadurch ist die Abfangeinrichtung leicht und benötigt wenig Material zur Herstellung. Alternativ ist die Abfangeinrichtung 10 als ein Blech ausgebildet. Ein solches Blech ist beispielsweise mit einem unteren Abschnitt des Gestells 3 verbunden. Alternativ ist das Blech oder Abfangeinrichtung 10 mit dem Vorsatzgerät 100 oder der Füllmaschine 200 verbunden.

Das Gestänge 12, mittels dem der Bügel 10 an dem Gestell 3 der Vorrichtung 1 befestigt ist, weist eine erste Stange 14 auf, die über ein Verbindungsstück 16 mit einer zweiten Stange 18 verbunden ist. Die erste Stange 14 dient dazu den Bügel 10 in vertikaler Richtung, bezogen auf eine übliche Ausrichtung der Vorrichtung 1, auszurichten. Die zweite Stange 18 dient dazu den Bügel 10 in horizontaler Richtung auszurichten. Sie ist über eine Verbindungsstelle 20 mit dem Gestell 3 so verbunden, dass die Stange 18 in verschiedenen Positionen relativ zu dem Gestell 3 befestigbar ist.

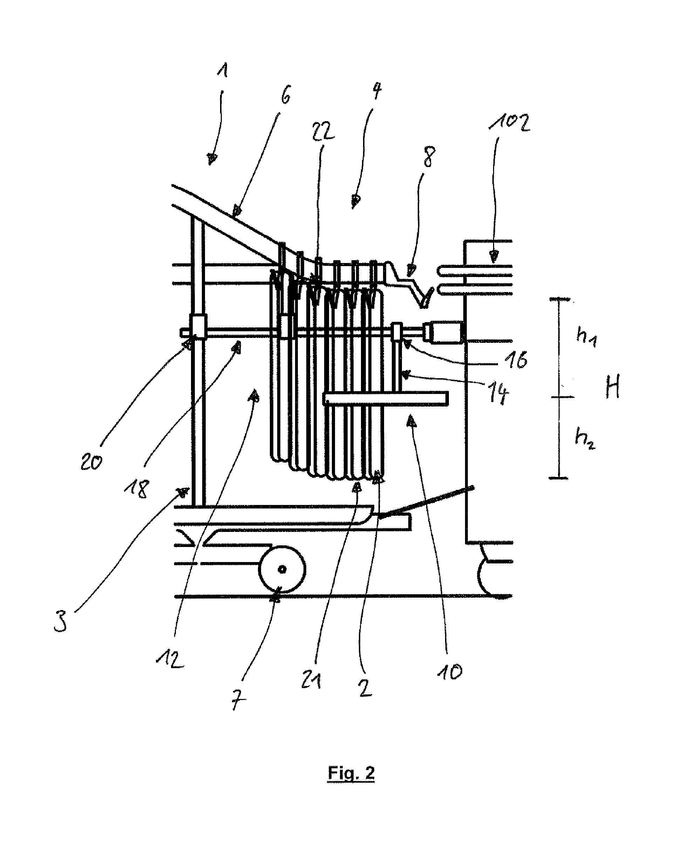

Gemäß Figur 2 sind die Haken 8 mit aufgehängten Schlaufen 2 dargestellt. Dabei ist an einem Haken 8 jeweils eine Abdrehstelle 22 zwischen zwei Würstchen angeordnet. Die vertikale Länge einer Schlaufe ist hier als Höhe H zwischen der Abdrehstelle 22 an einem oberen Ende der Schlaufe 2 und dem Scheitelpunkt am unteren Ende 21 der Schlaufe 2 angetragen. In Figur 2 sind die Schlaufen 2 nur schematisch dargestellt. Eine Schlaufe 2 kann aus zwei, drei, vier usw. einzelnen Würstchen gebildet sein.

Gemessen in der vertikalen Höhe H ist der Bügel 10 in einem Abstand h₁ von der oberen Abdrehstelle 22 und somit von den Haken 8 entfernt angeordnet. Höhe h₁ ist vorzugsweise so zu wählen, dass die Auslenkung der Wurstschlaufe maximal begrenzt ist und die Wurstschlaufen den Bügel nicht überspringen. Gemäß diesem Ausführungsbeispiel beträgt h₁ ungefähr 60 % von H. Ist der Bügel 10 wie in diesem Ausführungsbeispiel relativ flach bezogen auf seine vertikale Höhe ausgebildet, ist die Positionierung des Bügels 10 bezogen auf die Höhe H wesentlich für ein sicheres Aufhängen der Schlaufen 2 auf der Vorrichtung 1. Alternativ ist der Bügel als Blech ausgebildet und reicht von einem unteren Abschnitt des Gestells 3 bis hin zu den Haken. In einer solchen Ausführungsform bedarf es keiner Einstellung einer vertikalen Höhe des Bügels 10. Dieser reicht dann vorzugsweise über die gesamte Höhe H.

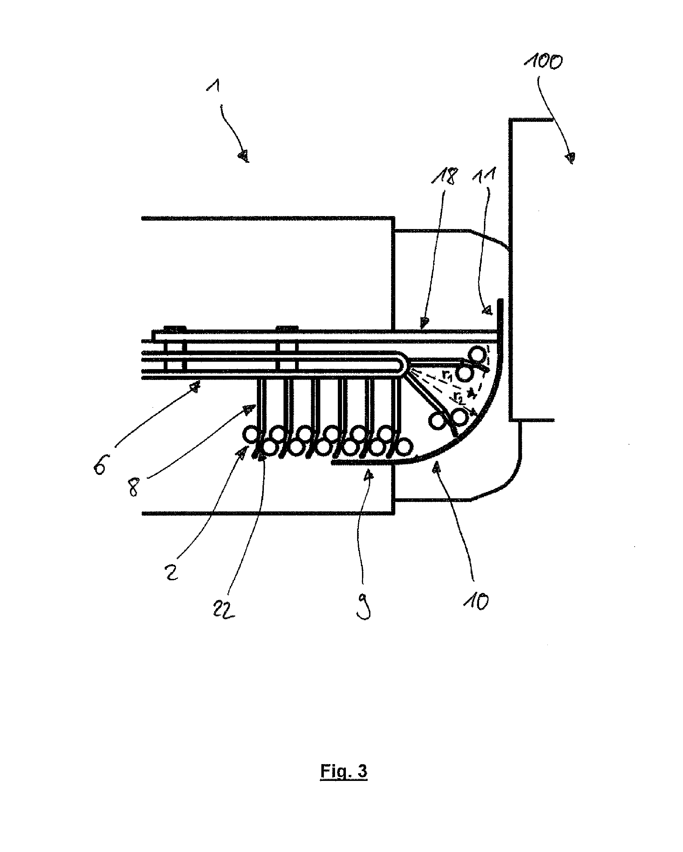

Der Bügel 10 ist gemäß Figur 3 im Wesentlichen als viertelkreisförmiger Bügel 10 ausgebildet. Die beiden Enden 9, 11 des Bügels 10 sind nicht gekrümmt, sondern gerade ausgebildet. Diese Form des Bügels 10 trägt zu einem effektiven Abfangen der Schlaufen 2 bei und verhindert ein Verdrehen und Spreizen der Schlaufen 2 auf effektive Weise.

Ferner ist der Bügel 10 radial außerhalb einer Bewegungsbahn der Haken 8 angeordnet. Gemäß diesem Ausführungsbeispiel weist der Viertelkreis des Bügels 10 einen Radius r₂ auf der größer ist als Radius r₁ der Umlaufbahn der Haken 8. Der Radius r₂ ist dabei nur geringfügig größer als Radius r₁, sodass sich die Schlaufen 2 an den Bügel 10 insbesondere in dem Endabschnitt 9 des Bügels 10 an diesen anschmiegen. Alternativ kann der Bügel 10 einen wesentlich größeren Radius r₂ aufweisen und/oder in dem Abschnitt 9 sind zusätzliche Dämpfungselemente angeordnet, die die Schlaufen 2 zusätzlich beruhigen, um ein Verdrehen, Spreizen und Herabspringen der Schlaufen 2 von den Haken 8 zu verhindern.

Der Ablauf eines erfindungsgemäßen Verfahrens zum Zuführen von Würstchenketten erfolgt gemäß diesem Ausführungsbeispiel wie folgt: Nachdem die Abdrehstellen 22 in einer Würstchenkette von einer Abdreheinrichtung (nicht gezeigt) an dem Vorsatzgerät 100 eingebracht wurden, wird eine Würstchenkette mittels der parallelen umlaufenden Bänder 102 zu der Vorrichtung 1 zugeführt. Ein entsprechender Haken 8 wird durch die Vorrichtung 1 so bereitgestellt, dass er in eine Abdrehstelle 22 zwischen zwei Würstchen eingreift. Nachdem der Haken 8 die Abdrehstelle 22 zwischen zwei Würstchen gefangen hat, bewegt sich dieser entlang dem ansteigenden Bereich 4, wobei die Bänder 102 weiter die Würstchenkette fördern. Dadurch bildet sich dann eine herabfallende Schlaufe 2. Diese schwingende Schlaufe 2 wird dann im Flug mittels des Bügels 10 so beruhigt, dass ein sicheres Aufhängen der Schlaufe 2 auf einem Haken gewährleistet ist. Anschließend kommt der nächste Haken 8 mit der nächsten Abdrehstelle in Eingriff, es bildet sich wiederum eine Schlaufe 2, die wiederum mittels des Bügels 10 abgefangen wird. Dementsprechend werden die Schritte des Verfahrens jeweils sequenziell durchgeführt, wobei Schritte auch teilweise simultan ablaufen können.

## Patentansprüche

1. Vorrichtung (1) zum Aufhängen von Würstchenketten in Schlaufen (2), mit einer Führungs- und Antriebseinrichtung zum Führen und Antreiben von Haken (8) entlang einer Bewegungsbahn, welche ein antreibbares, umlaufendes Antriebselement zur beabstandeten Aufnahme und zum Antreiben mehrerer Haken (8) aufweist, und mit mehreren mit dem Antriebselement koppelbaren Haken (8) zum Tragen einer Schlaufe (2) der Würstchenkette,
**gekennzeichnet durch** eine Abfangeinrichtung (10) zum Abfangen einer Schlaufe (2), welche unterhalb und im Wesentlichen radial außerhalb der Bewegungsbahn der Haken angeordnet ist.

2. Vorrichtung nach Anspruch 1,
**dadurch gekennzeichnet, dass** die Abfangeinrichtung (10) als Bügel ausgebildet ist.

3. Vorrichtung nach einem der vorstehenden Ansprüche,
**dadurch gekennzeichnet, dass** der Bügel im Wesentlichen viertelkreisförmig ausgebildet ist, wobei der Radius (r₂) dieses Vierteilkreises gleich groß oder größer als der Radius (r₁) der Bewegungsbahn der Haken (8) ist.

4. Vorrichtung nach einem der vorstehenden Ansprüche,
**dadurch gekennzeichnet, dass** die Abfangeinrichtung (10) verstellbar ist, vorzugsweise in einer Höhenrichtung, einer Längsrichtung und/oder einer Querrichtung der Vorrichtung.

5. Vorrichtung nach einem der vorstehenden Ansprüche,
**dadurch gekennzeichnet, dass** die Abfangeinrichtung (10) so angeordnet ist, dass sie von einem Haken (8) aus gesehen in einem Bereich zwischen etwa 0,2 - 0,9, insbesondere 0,2 - 0,6 der Höhe (H) einer Schlaufe (2) der Würstchenkette angeordnet ist.

6. Vorrichtung nach einem der vorstehenden Ansprüche,
**dadurch gekennzeichnet, dass** die Abfangeinrichtung (10) relativ zu der Vorrichtung (1) zum Aufhängen von Würstchenketten in Abhängigkeit von mindestens einem der folgenden Parameter angeordnet ist: Zuführgeschwindigkeit einer Zuführung von Würstchenketten zu der Vorrichtung (1); Anzahl der Würstchen je Schlaufe (2); Höhe der Schlaufe (H) in einem aufgehängten Zustand; Masse eines Würstchens; Verhältnis der Länge einer Abdrehstelle zu der Länge eines Würstchens; Festigkeit eines Würstchens; Füllmaterial; Umhüllungsmaterial; Hakengeometrie; Durchmesser eines Würstchens; Länge einer Abdrehstelle; Temperatur.

7. Vorrichtung nach einem der vorstehenden Ansprüche,
**dadurch gekennzeichnet, dass** die Abfangeinrichtung (10) von einem Haken (8) aus gesehen wenigstens
- in Höhe des zweiten Würstchens angeordnet ist, falls eine Schlaufe (2) 4 oder 6 Würstchen aufweist;
- in Höhe des dritten Würstchens angeordnet ist, falls eine Schlaufe (2) 8 Würstchen aufweist;
- in Höhe des vierten Würstchens angeordnet ist, falls eine Schlaufe (2) 10 oder 12 Würstchen aufweist.

8. Vorrichtung nach einem der vorstehenden Ansprüche,
**dadurch gekennzeichnet, dass** die Abfangeinrichtung (10)
- radial in einem größeren Abstand von der Bewegungsbahn angeordnet ist, falls eine Zuführgeschwindigkeit groß und/oder eine Würstchenmasse klein und/oder die Anzahl der Würstchen je Schlaufe (2) groß ist;
- radial in einem kleineren Abstand von der Bewegungsbahn angeordnet ist, falls die Zuführgeschwindigkeit klein und/oder die Würstchenmasse groß und/oder die Anzahl der Würstchen je Schlaufe (2) klein ist.

9. Verfahren zum Zuführen von Würstchenketten zu einer Vorrichtung (1) zum Aufhängen von Würstchenketten in Schlaufen (2), vorzugsweise einer Vorrichtung (1) nach einem der Ansprüche 1 bis 8,
mit den Schritten:
- Zuführen der Würstchenkette aus einer Füllmaschine (100, 200) zu der Vorrichtung (1);
- Bereitstellen eines Hakens (8) zum Fangen einer Abdrehstelle (22) zwischen zwei Würstchen;
- Fangen der Abdrehstelle (22) mittels des Hakens (8);
- Beruhigen einer schwingenden Schlaufe (2) mittels einer Abfangeinrichtung (10).

10. Abfangeinrichtung (10) zum Abfangen von Schlaufen (2), welche auf einer Vorrichtung (1) aufhängbar sind,
wobei die Abfangeinrichtung (10) dazu eingerichtet ist mit einer Vorrichtung (1) nach einem der Ansprüche 1 bis 8 zusammenzuwirken und/oder in einem Verfahren nach Anspruch 9 betrieben zu werden.

11. Abfangeinrichtung nach Anspruch 10,
**dadurch gekennzeichnet, dass** sie die Merkmale einer Abfangeinrichtung (10) einer Vorrichtung (1) gemäß mindestens einem der Ansprüche 1 bis 8 aufweist.
